# FASCICULE DE BREVET EUROPEEN

(11) **EP 0 606 037 B1**
(45) Date de publication et mention de la délivrance du brevet: **09.07.1997**
(21) Numéro de dépôt: 93420445.4
(22) Date de dépôt: 09.11.1993
(51) Int. Cl.: B29C 45/46, B29C 45/34, B29C 45/43

(54) **Dispositif pour l'injection des matières composites à l'intérieur des moules de conformation**
Vorrichtung zum Spritzgiessen von Verbundstoffen in Formgebungsformen
Apparatus for injection moulding composite materials inside shaping moulds

(30) Priorité: 12.11.1992 FR 9213811
(43) Date de publication de la demande: 13.07.1994
(73) Titulaire: INOPLAST, Société Anonyme:, F-07340 Serrières (FR)
(72) Inventeur: Barbe, Jean-Noel, F-26140 Albon (FR); Bosg, Patrick, F-26240 Saint Barthelemy de Vals (FR)
(74) Mandataire: Monnier, Guy

(56) Documents cités:
- DE-A- 3 727 640
- FR-A- 1 208 726
- GB-A- 1 260 166
- COMPOSITES vol. 31, no. 3 Mai/Juin 1991, , PARIS pages 342 - 346 MAERTENS 'Système d'injection BMC "INCOROC"'

## Description

La présente invention a trait au moulage des matières dites "composites", c'est-à-dire constituées par un mélange convenablement dosé d'une résine polymérisable, de fibres de renfort et de charges appropriées.

On sait que pour l'injection de ces matières composites à l'intérieur des moules de conformation, on a généralement recours à une vis sans fin qui est animée d'une part d'un mouvement de rotation suivant son axe pour assurer le transfert de la matière, d'autre part d'un mouvement de translation axiale pour agir à la manière d'un piston en refoulant à force ladite matière dans l'empreinte de moulage.

Afin de remédier à certains inconvénients de ce système classique, relatifs en particulier au hachage des fibres par la vis sans fin et à la création d'une importante carotte d'injection, on a proposé dans le brevet français N° 88 04564/2629388 (INOCAR) un appareillage perfectionné qui comprend, en plus d'un certain nombre de doseurs à piston mobile reliés à un dispositif commun d'alimentation également du type à piston, une série de dispositifs d'injection prévus en nombre égal à celui des doseurs précités et directement montés sur le moule de conformation en différents points de l'empreinte de moulage. Chaque dispositif d'injection est équipé d'une aiguille associée à un vérin d'actionnement qui est commandé pour parfaire l'injection opérée par le doseur correspondant et pour obturer finalement l'orifice correspondant de l'empreinte de conformation.

Un tel agencement a donné d'excellents résultats, mais on se heurte encore à un inconvénient d'ailleurs rencontré dans les systèmes d'injection classiques à vis sans fin, relatif à l'évacuation de l'air qui emplit l'empreinte de moulage lors de l'opération d'injection. Pour assurer cette évacuation, il est d'usage de ménager un très léger espace entre les deux parties du moule à la position fermée, mais l'on conçoit que si cet espace est trop mince l'injection est perturbée, alors que s'il est suffisamment large pour éviter tout freinage de l'air, on obtient sur la périphérie des bavures qui doivent être ensuite éliminées.

On a proposé de ménager à travers l'une au moins des deux parties du moule un ou plusieurs évents d'évacuation qui sont obturés immédiatement après l'injection de la matière composite. Si un tel processus évite bien la formation de bavures trop importantes tout en facilitant l'injection, il n'en reste pas moins que la fabrication du moule est compliquée par la réalisation des évents et de leur obturateur, et que ces évents, même fermés à temps, impriment encore une trace disgracieuse sur la paroi extérieure des articles moulés.

C'est à ce problème de l'évacuation de l'air lors de l'injection de la matière composite dans l'empreinte de moulage que s'est attachée la présente invention, laquelle a pour objet le dispositif d'injection qui est défini à la revendication 1, dont le préambule correspond au document FR-A-2 629 388 précité.

En fait l'invention consiste principalement, dans le cadre d'un dispositif d'injection du type à aiguille mobile suivant le document antérieur précité, à prévoir à l'intérieur du corps qui porte le nez d'injection, deux aiguilles concentriques coulissantes associées à des moyens de commande indépendants qui sont actionnés en succession de façon à ce qu'immédiatement avant la pénétration de la matière composite dans le corps à travers un premier canal oblique et son refoulement dans l'empreinte, l'aiguille centrale recule et découvre l'espace intérieur de l'aiguille extérieure pour opérer, par aspiration à travers un second canal oblique relié à une source d'aspiration appropriée et décalé axialement vers l'arrière par rapport au premier canal, l'évacuation de l'air enclos dans ladite empreinte, tandis que le déplacement axial simultané des deux aiguilles vers le nez assure le refoulement à force ultérieur.

Il n'est pas sans intérêt de noter que l'espace interne de l'aiguille tubulaire découvert par l'aiguille intérieure est susceptible d'être utilisé d'une part pour l'injection d'un vernis ou résine de surfaçage propre à recouvrir la paroi externe des articles moulés, d'autre part pour l'admission d'un jet d'air comprimé susceptible de faciliter l'éjection de ces articles hors du moule et le sectionnement des bavures éventuelles.

Le dessin annexé, donné à titre d'exemple, permettra de mieux comprendre l'invention, les caractéristiques qu'elle présente et les avantages qu'elle est susceptible de procurer :
Fig. 1 est une coupe axiale schématique illustrant l'agencement général d'un dispositif d'injection établi conformément à l'invention.
Fig. 2 à 5 sont des coupes de détail à plus grande échelle montrant les pièces mobiles du dispositif aux différentes phases du processus d'injection.

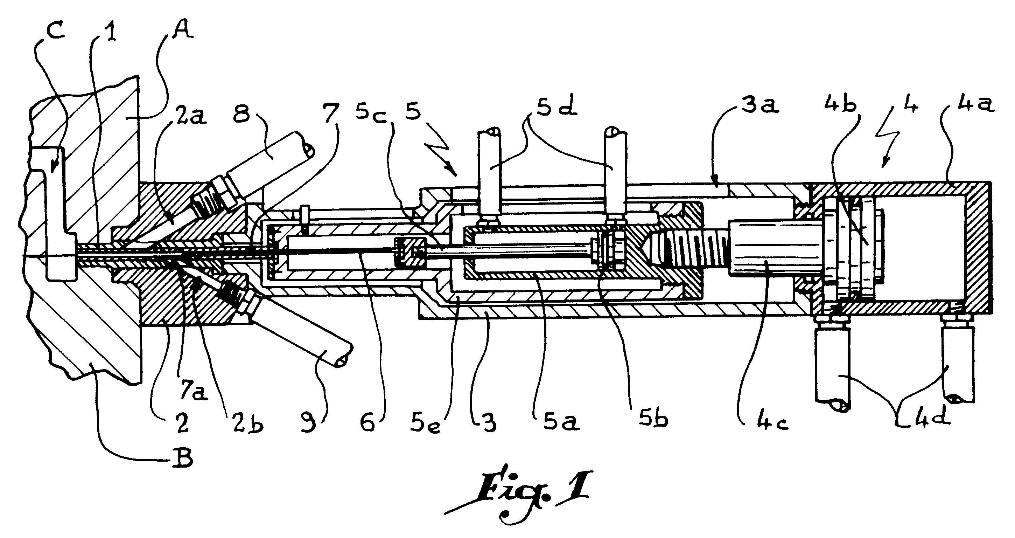

En fig. 1, les références A et B désignent les deux parties d'un moule de conformation dont l'empreinte de moulage apparait en C. Cette dernière communique avec l'espace annulaire d'un nez d'injection 1 qui traverse axialement le corps 2 de l'injecteur, lequel corps 2 est latéralement solidaire d'un prolongement tubulaire 3 apte à former logement pour deux vérins de commande 4 et 5.

Le vérin 4, prévu en bout du prolongement 3, comprend un cylindre 4a à l'intérieur duquel se déplace un piston 4b solidaire d'une tige 4c, le déplacement axial de l'équipage mobile 4b-4c étant opéré par l'admission sélective d'un fluide sous pression à travers l'une ou l'autre de deux canalisations 4d.

Le cylindre 5a du vérin 5 est fixé en bout de la tige mobile 4c du vérin 4 et renferme un piston 5b pourvu d'une tige axiale 5c. Bien entendu, les deux canalisations 5d qui assurent la commande axiale du piston 5b sont engagées à travers une lumière longitudinale 3a du prolongement 3, afin de ne pas gêner le déplacement de l'équipage mobile 5b-5c du vérin 5.

Autour du cylindre 5a est prévue une douille 5e qui est fixée audit cylindre afin de se déplacer axialement en même temps que celui-ci et que l'équipage mobile 4b-4c du vérin 4. Le fond de cette douille 5e est traversé par une aiguille 6 qui est rendue solidaire de l'extrémité de la tige 5c et qui est engagée axialement à l'intérieur d'une aiguille tubulaire 7. Cette dernière est fixée contre le fond transversal de la douille 5e et elle est introduite à coulissement à travers le nez d'injection 1.

On notera encore que le corps 2 est percé de deux canaux obliques 2a et 2b décalés l'un par rapport à l'autre le long du nez 1.
- Le canal 2a qui est le plus proche de l'empreinte de moulage C est relié à une canalisation 8 qui aboutit à la sortie du doseur de matière composite.
- Au canal 2c se raccorde une canalisation 9 qui est susceptible d'être, au moment opportun, reliée à une source de vide.

Il va de soi que la paroi tubulaire du nez 1 est percée d'un orifice au niveau du débouché de chacun des canaux obliques 2a et 2b.

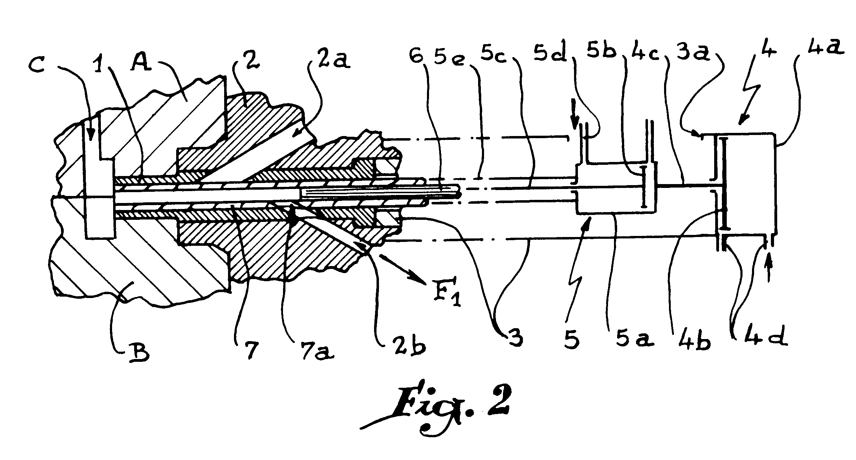

Pour exposer le fonctionnement du dispositif d'injection qui vient d'être décrit, on partira de la phase opératoire illustrée en fig. 2. Le vérin 4 a été alimenté de façon à ce que l'extrémité libre de l'aiguille tubulaire 7 se trouve au niveau de l'extrémité du nez 1, ladite aiguille 7 obturant de la sorte le débouché du canal 2a. Par contre, le vérin 4 a été actionné de manière à ce que l'aiguille intérieure 6 se trouve en position reculée, son extrémité libre étant disposée immédiatement en arrière du débouché du canal 2b.

Il est clair dans ces conditions que l'empreinte C est reliée à la source de vide à travers l'espace intérieur de l'aiguille 7, un orifice latéral 7a de cette aiguille, le canal 2b et la canalisation 9, si bien que l'air qui emplit ladite empreinte est évacué par aspiration (flèche F1).

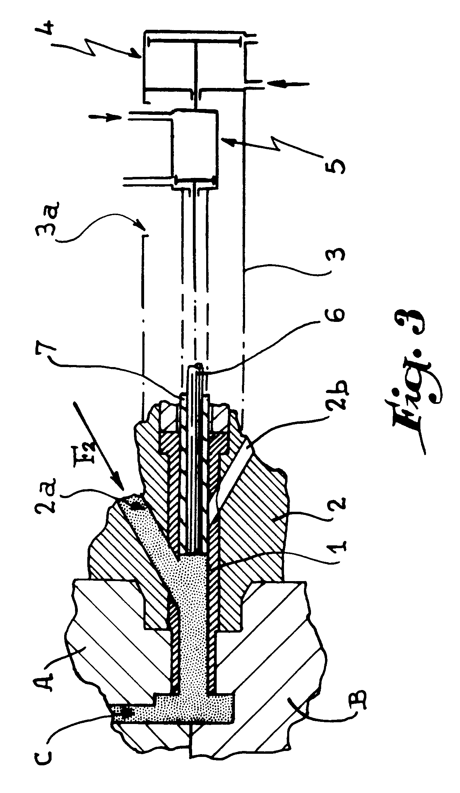

Immédiatement après, les deux vérins 4 et 5 sont alimentés à la manière illustrée par les flèches de fig. 3. L'aiguille centrale 6 s'avance jusqu'au niveau du débouché du canal 2a en obturant de la sorte le débouché du canal 2b, en même temps que l'aiguille tubulaire 7 est avancée afin que son extrémité vienne se disposer au même niveau que celle de l'aiguille 6, le tout comme montré en fig. 3.

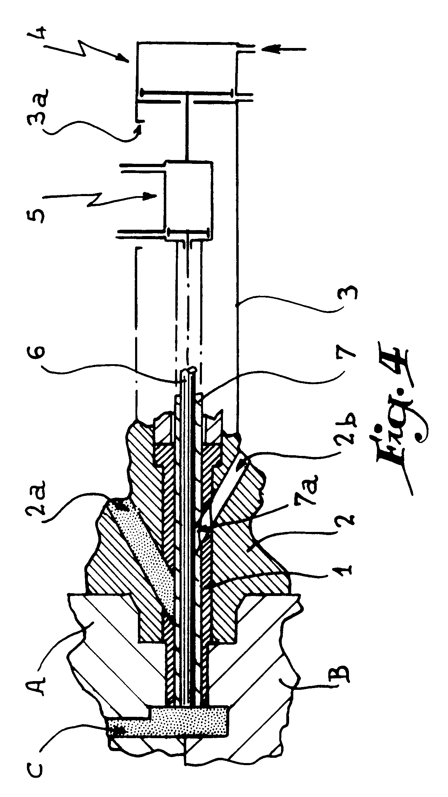

Le doseur associé à la canalisation 8 peut ainsi refouler sa dose de matière composite dans le canal oblique 2a (flèche F2), dans la partie antérieure du nez 1 et dans l'empreinte de moulage C dont le remplissage est ainsi réalisé. Afin de parfaire ce remplissage, le vérin 5 est alimenté à la manière illustrée en fig. 4, si bien que les deux aiguilles 6 et 7 se déplacent simultanément vers l'avant à la manière d'un piston monobloc, en obturant le canal 2a et en repoussant à force la matière composite dans l'empreinte C.

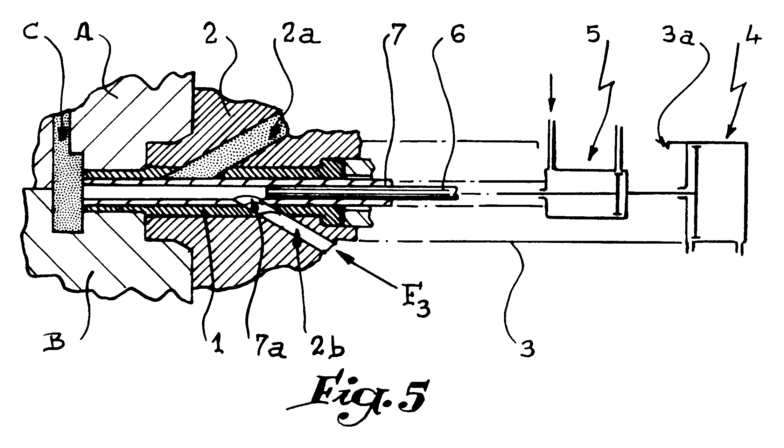

La phase de polymérisation et de durcissement peut ainsi prendre place à l'intérieur de l'empreinte C, les deux parties A et B du moule s'ouvrant finalement pour libérer l'article réalisé. Dans le cas où l'on envisage d'injecter dans l'empreinte C, préalablement à son ouverture, une dose de produit de surfaçage (I.M.C.), on alimente le vérin 5 à la manière illustrée en fig. 5 afin de faire reculer l'aiguille 6 jusqu'en amont du débouché du canal 2b, l'aiguille tubulaire 7 restant en position avancée. La canalisation 8 est alors branchée sur une source sous pression de produit de surfaçage qui emplit l'espace intérieur de l'aiguille 7 (flèche F3) ; la dose ainsi délivrée est refoulée à force dans l'empreinte C par le déplacement axial de l'aiguille 6 obtenu moyennant une alimentation convenable du vérin 5.

La canalisation 9 et le canal oblique 2b sont susceptibles d'être utilisés, toujours moyennant recul de l'aiguille 6, pour l'injection d'un jet d'air comprimé dans l'empreinte C à la fin de la phase de polymérisation. Cette injection, opérée en même temps que l'ouverture des deux parties A et B, a pour effet de faciliter l'éjection de l'article moulé hors de l'empreinte C et de sectionner les très légères bavures qui peuvent malgré tout subsister au niveau du plan de joint du moule.

En tout état de cause, on comprend que l'évacuation de l'air hors de l'empreinte C avant injection de la matière composite facilite le remplissage de ladite empreinte, sans créer sur la surface des articles moulés aucune trace autre que celle correspondant à l'injection.

Il va de soi qu'on peut imaginer, pour la manoeuvre indépendante des deux aiguilles 6 et 7, des moyens d'actionnement plus sophistiqués que ceux décrits ci-dessus, et plus aptes à une commande centralisée à l'aide d'un automate ou similaire.

## Revendications

1. Dispositif pour l'injection des matières composites à l'intérieur des moules de conformation, du genre dans lequel le remplissage de l'empreinte de moulage (C) est parfait moyennant déplacement axial d'une aiguille à l'intérieur d'un nez d'injection (1) prévu en bout d'un corps (2) alimenté en matière composite, caractérisé en ce que ce corps (2) renferme à coulissement axial deux aiguilles concentriques (6, 7) associées à des moyens de commande indépendants (4, 5) qui sont actionnés en succession de façon à ce qu'immédiatement avant la pénétration de la matière composite dans le corps (2) à travers un premier canal (2a) et son refoulement dans l'empreinte (C), l'aiguille centrale (6) recule et découvre l'espace interne de l'aiguille extérieure tubulaire (7) pour opérer, par aspiration à travers un second canal (2b) relié à une source de vide appropriée et décalé axialement vers l'arrière par rapport au premier canal, l'évacuation de l'air enclos dans ladite empreinte (C), tandis que le déplacement axial simultané des deux aiguilles (6, 7) en direction du nez (1) assure le refoulement à force ultérieur.

2. Dispositif suivant la revendication 1, caractérisé en ce que les deux canaux (2a, 2b) sont orientés obliquement d'arrière en avant en direction des deux aiguilles concentriques (6, 7).

3. Dispositif suivant l'une quelconque des revendications 1 et 2, caractérisé en ce que le second canal (2b) est susceptible d'être également raccordé sélectivement à une source de produit de surfaçage (I.M.C.) et à une source d'air comprimé.

## Claims

1. Apparatus for injecting composite materials inside shaping moulds, of the type in which the filling of the mould impression (C) is achieved by means of an axial displacement of a needle in the interior of an injection nozzle (1) provided at the end of a body (2) supplied with composite material, characterised in that this body (2) surrounds, with axial sliding, two concentric needles (6, 7) associated with independent control means (4, 5) which are actuated in succession so that, immediately prior to the composite material entering the body (2) through a first pipe (2a) and its being discharged into the impression (C), the central needle (6) moves back and uncovers the internal space of the tubular external needle (7) in order to effect, by means of suction through a second pipe (2b) which is connected to an appropriate vacuum source and is offset axially rearwardly relative to the first pipe, the evacuation of the air enclosed in said impression (C), whilst the simultaneous axial displacement of the two needles (6, 7) in the direction of the nozzle (1) ensures the subsequent forced discharge.

2. Apparatus according to claim 1, characterised in that the two pipes (2a, 2b) are orientated obliquely from back to front in the direction of the two concentric needles (6, 7).

3. Apparatus according to any of claims 1 and 2, characterised in that the second pipe (2b) is equally capable of being connected selectively to a source of surfacing product (I.M.C.) and to a source of compressed air.

## Patentansprüche

1. Vorrichtung zum Einspritzen eines Kompositmaterials in das Innere einer Formgebungsform von der Art, hei der die Füllung des Formhohlraums (C) mittels axialer Verschiebung einer Nadel im Inneren eines Mundstücks (1) vollendet wird, welches am Ende eines Körpers (2) einer mit Kompositmaterial gespeisten Einspritzvorrichtung angeordnet ist, dadurch gekennzeichnet, daß dieser Körper (2) in einer axialen Führung zwei konzentrische Nadeln (6, 7) enthält, die mit unabhängig voneinander wirkenden Steuerelementen (4, 5) verbunden sind, die nacheinander in der Weise betätigt werden, daß unmittelbar vor dem Durchgang des Kompositmaterials durch einen ersten Kanal (2a) im Körper (2) und seine Förderung in den Hohlraum (C) die zentrale Nadel (6) zurückfährt und den Innenraum der äußeren Hohlnadel freigibt, um durch Absaugen über einen zweiten Kanal (2b), der mit einer geeigneten Vakuumquelle verbunden und gegenüber dem ersten Kanal axial nach hinten verschoben ist, die Entfernung der Luft, die in dem genannten Hohlraum (C) eingeschlossen ist, zu bewirken, wohingegen die gleichzeitige Axialverschiebung der beiden Nadeln (6, 7) in Richtung Spritzgießmundstück (1) die Materialförderung mit Nachdruck sichert.

2. Vorrichtung nach Anspruch 1, dadurch gekennzeichnet, daß die zwei Kanäle (2a, 2b) schräg nach hinten geneigt und/oder voreinander versetzt in Richtung der zwei konzentrischen Nadeln (6, 7) orientiert sind.

3. Vorrichtung nach einem der beiden Ansprüche 1 und 2, dadurch gekennzeichnet, daß der zweite Kanal (2b) dafür geeignet ist, wahlweise genauso an eine Quelle eines oberflächenverbessernden Produkts (I.M.C.) wie an eine Druckluftquelle angeschlossen zu werden.
